# EUROPÄISCHE PATENTSCHRIFT

(11) **EP 1 954 954 B1**
(45) Veröffentlichungstag und Bekanntmachung des Hinweises auf die Patenterteilung: **15.01.2014**
(21) Anmeldenummer: 06819451.3
(22) Anmeldetag: 14.11.2006
(51) Int. Cl.: F16C 29/06

(54) **LINEARWÄLZLAGER**
LINEAR ROLLING BEARING
PALIER A ROULEMENT LINEAIRE

(30) Priorität: 19.11.2005 DE 102005055194
(43) Veröffentlichungstag der Anmeldung: 13.08.2008
(73) Patentinhaber: Schaeffler Technologies AG & Co. KG, 91074 Herzogenaurach (DE)
(72) Erfinder: KLOS, Peter, 66629 Freisen (DE); HEIPT, Peter, 66386 St. Ingbert (DE); BAUER, Wolfgang, 66292 Riegelsberg (DE)
(86) Internationale Anmeldenummer: PCT/EP2006/068424
(87) Internationale Veröffentlichungsnummer: WO 2007/057383

(56) Entgegenhaltungen:
- EP-A- 1 517 056
- DE-A1- 3 527 886
- DE-A1- 10 052 848
- DE-A1- 19 525 219
- DE-A1- 19 615 722

## Beschreibung

Die vorliegende Erfindung betrifft ein Linearwälzlager, bei dem ein Führungswagen auf einer Führungsschiene längsverschieblich geführt werden kann.

Aus DE 44 13 373 beispielsweise ist ein Linearwälzlager bekannt geworden, bei dem ein Führungswagen auf einer Führungsschiene längsverschieblich angeordnet ist. Der Führungswagen ist für einen endlosen Umlauf von Wälzkörpern mit mehreren endlosen Wälzkörperkanälen versehen. Jeder Wälzkörperkanal umfasst einen Lastabschnitt, einen Rücklaufabschnitt und zwei den Lastabschnitt mit dem Rücklaufabschnitt verbindende Umlenkabschnitte. In dem Lastabschnitt wälzen die Wälzkörper an Laufbahnen der Führungsschiene und des Führungswagens ab. Im Rücklaufabschnitt werden die Wälzkörper lastfrei zurückgeführt. In den Umlenkabschnitten werden die Wälzkörper von dem Lastabschnitt in den Rücklaufabschnitt oder umgekehrt umgelenkt. Jeder Umlenkabschnitt weist eine mit einer inneren Umlenkbahn versehene Innenumlenkung und eine mit einer äußeren Umlenkbahn versehene Außenumlenkung auf. Die Außenumlenkung ist an einem Kopfstück des Führungswagens aus Kunststoff einstückig angeformt. Die Innenumlenkung ist an einem separaten Kunststoffstück ausgebildet, das ebenso wie das Kopfstück stirnseitig an einem Tragkörper des Führungswagens befestigt ist. Insbesondere bei hohen Umlaufgeschwindigkeiten üben die umlaufenden Wälzkörper erhebliche Fliehkräfte auf die Umlenkabschnitte aus. Wenn beispielsweise die Innenumlenkung nicht einwandfrei befestigt ist, kann ein unerwünschter Versatz zwischen der Innenumlenkung und der Außenumlenkung die Folge sein. Ferner muss beim Zusammenbau des Führungswagens bereits auf eine einwandfreie Positionierung sowohl der Innenumlenkung als auch der Außenumlenkung für einen einwandfreien Umlauf der Wälzkörper geachtet werden.

Aus DE19615722A1 ist ein Linearwälzlager nach den Merkmalen des Oberbegriffs des Anspruchs 1 bekannt geworden.

Aufgabe der vorliegenden Erfindung ist es, ein Linearwälzlager nach den Merkmalen des Oberbegriffs des Anspruchs 1 anzugeben, das einfach herstellbar ist und eine einwandfreie Umlenkung der Wälzkörper in den Umlenkabschnitten gewährleistet.

Erfindungsgemäß wird diese Aufgabe durch das Linearwälzlager gemäß Anspruch 1 gelöst. Die Anzahl der Teile ist reduziert und eine Ausrichtung der Innenumlenkung und der Außenumlenkung zueinander entfällt. Auf diese Weise ist ein Linearwälzlager bereitgestellt, das gegenüber den bekannten Linearwälzlagern einfacher herstellbar ist, wobei eine einwandfreie Führung der Wälzkörper im Umlenkabschnitt gewährleistet ist.

Die Umlenkabschnitte sind erfindungsgemäß jeweils an einem Kopfstück und die Lastabschnitte an einem Tragkörper des Führungswagens ausgebildet, wobei das Kopfstück einstückig mit dem jeweiligen Umlenkabschnitt verbunden ist Einmal abgesehen von eventuell vorzusehenden Dichtungen ist somit ein kompaktes Kopfstück gebildet, das an dem Tragkörper des Führungswagens stirnseitig aufgesetzt werden kann, ohne dass eine Vielzahl von Einzelteilen montiert werden müssten.

In bekannter Weise kann der etwa u-förmige Führungswagen mit zwei Schenkeln für den Umgriff der Führungsschiene versehen sein, wobei an jedem Schenkel wenigstens ein, vorzugsweise zwei parallel zueinander angeordnete Lastabschnitte des endlosen Wälzkörperkanals vorgesehen sind, wobei die etwa u-förmigen Kopfstücke jeweils zwei Schenkelabschnitte aufweisen, die über einen Verbindungsabschnitt einstückig miteinander verbunden sind.

An jedem Schenkelabschnitt können ein, vorzugsweise zwei Umlenkabschnitte einstückig ausgebildet sein.

Wenn erfindungsgemäße Linearwälzlager einer Betastrahlung ausgesetzt sind, kann eine unerwünschte Beschleunigung des Alterungsprozesses des für die Umlenkabschnitte verwendeten Kunststoffes die Folge sein. In diesem Fall sieht eine erfindungsgemäße Weiterbildung vor, die Umlenkabschnitte aus einem Metall zu bilden, das für diese Einsatzbedingung besser als Kunststoff geeignet ist.

Eine günstige erfindungsgemäße Weiterbildung sieht die Kombination von aus Metall gebildeten Umlenkabschnitten mit einer Herstellung dieser Umlenkabschnitte im Feinguss vor. Im Feingussverfahren können hochgenaue Produkte erzeugt werden.

Ein Herstellverfahren eines erfindungsgemäßen Linearwälzlagers sieht vor, dass der Tragkörper und die Kopfstücke getrennt hergestellt und aus Metall gebildet sind, wobei jeder Umlenkabschnitt im Feingussverfahren hergestellt ist. Hierbei können die Kopfstücke einstückig mit den jeweiligen Umlenkabschnitten verbunden sein.

Ein hochgenaues Kopfstück kann mit dem folgenden Verfahren hergestellt werden: zunächst wird ein Modell des Kopfstückes aus einem im Vergleich zu Stahl niedrig schmelzenden Werkstoff hergestellt. Dieses Modell wird dann mit einer feuerfesten Überzugsmasse, vorzugsweise mit einer keramischen Masse überzogen. Nach Abbinden oder Erstarren dieser Überzugsmasse wird das Modell in einen Formstoff eingebettet und, gemeinsam mit dem Formstoff gebrannt. Unter diesem Brennvorgang wird der niedrig schmelzende Werkstoff des Modells unter Freigabe eines Formhohlraums ausgeschmolzen. Schließlich wird das Kopfstück bildendes geschmolzenes Metall in den Formhohlraum eingegossen. Wenn dieses geschmolzene Metall erstarrt ist, wird der gebrannte Formstoff und die Überzugsmasse unter Freigabe des nun erstarren Kopfstückes entfernt. Dieses so gebildete Kopfstück kann ggf. ohne weitere Bearbeitung an den Tragkörper des Führungswagens angeflanscht werden.

Das Modell kann zunächst aus mehreren Teilen zusammengesetzt sein, wobei dieses Modell das etwa u-förmige Kopfstück bildet, das jeweils zwei Schenkelabschnitte aufweist, die über einen Verbindungsabschnitt miteinander verbunden sind, wobei jeder Schenkelabschnitt mindestens einen Umlenkabschnitt mit Innenumlenkung und Außenumlenkung aufweist.

Nachstehend wird die Erfindung anhand eines in insgesamt vier Figuren abgebildeten Ausführungsbeispieles näher erläutert. Es zeigen:
- Figur 1: eine Draufsicht auf ein erfindungsgemäßes Linearwälzlager,
- Figur 2: einen Querschnitt durch das erfindungsgemäße Linearwälzlager,
- Figuren 3, 4: jeweils ein Teil des erfindungsgemäßen Linearwälzlagers mit unterschiedlichen Schnitten.

### Ausführliche Beschreibung der Zeichnungen

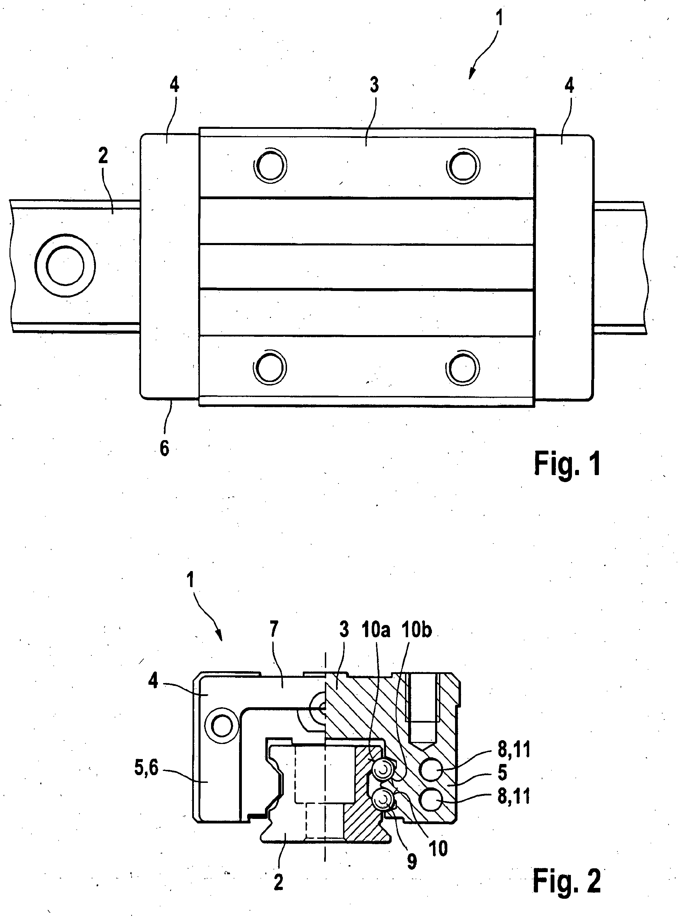

Das in den Figuren 1 bis 4 abgebildete erfindungsgemäße Linearwälzlager weist einen Führungswagen 1 auf, der auf einer Führungsschiene 2 längsverschieblich geführt ist. Der Führungswagen 1 umfasst einen Tragkörper 3 und stirnseitig an den Tragkörper 3 angeflanschte Kopfstücke 4 auf.

Der etwa U-förmig ausgebildete Führungswagen 1 umgreift mit seinen beiden Schenkel 5 die Führungsschiene 2 an ihren beiden Längsseiten. Jedes Kopfstück ist mit korrespondierenden Schenkelabschnitten 6 und einem die beiden Schenkelabschnitte 6 verbindenden Verbindungsabschnitt 7 versehen.

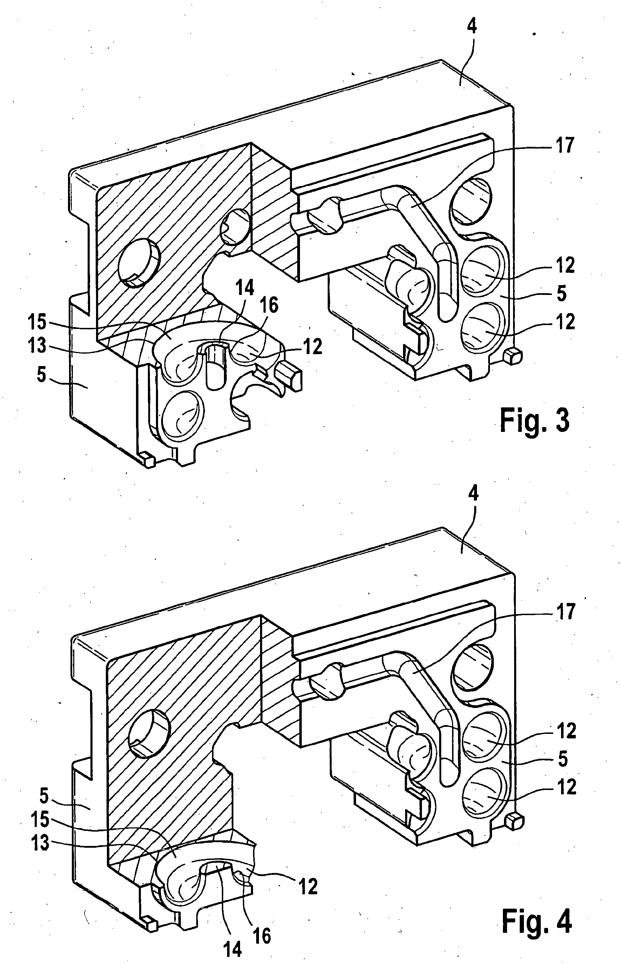

Der Führungswagen 1 ist mit vier endlosen Wälzkörperkanälen 8 versehen, von denen jeweils zwei übereinander liegen und an einem Schenkel 5 des Führungswagens 1 ausgebildet sind. In jedem Wälzkörperkanal 8 laufen durch Kugeln gebildete Wälzkörper 9 endlos um. Der Wälzkörperkanal 8 weist einen Lastabschnitt 10, einen Rücklaufabschnitt 11, und zwei den Rücklaufabschnitt 11 mit dem Lastabschnitt 10 verbindende Umlenkabschnitte 12 auf. Der Lastabschnitt 10 und der Rücklaufabschnitt 11 sind in der Figur 2 abgebildet. Die beiden Umlenkabschnitte 12 eines Schenkels 5 sind deutlich in den Figuren 3 und 4 abgebildet.

In den Figuren 3 und 4 ist ein Kopfstück 4 abgebildet, wobei die unterschiedlichen Schnittführungen Schnitte durch die beiden Umlenkabschnitte 12 eines der beiden Schenkel 5 zeigen. Das Kopfstück 5 ist vollständig aus Metall im Feingussverfahren hergestellt. Im Feingussverfahren können eine Vielzahl von Stählen verwendet werden, beispielsweise Einsatzstähle, Vergütungsstähle, Nitrierstähle, Werkzeugstähle, Schnellarbeitsstähle, rost- sowie säurebeständige Stähle und auch NE-Metalle.

Den Figuren 3 und 4 ist deutlich zu entnehmen, dass jeder Umlenkabschnitt eine Außenumlenkung 13 und eine Innenumlenkung 14 aufweist, wobei die Außenumlenkung 13 mit einer äußeren Umlenkbahn 15 und die Innenumlenkung 14 mit einer inneren Umlenkbahn 16 versehen ist. Die Außenumlenkung 13 und die Innenumlenkung 14 sind im Feingussverfahren einstückig hergestellt und miteinander verbunden.

Das Kopfstück 4 ist ferner mit Schmierkanälen 17 versehen, um Schmierstoff in den Bereich des endlosen Wälzkörperkanals 8 zu bringen.

Die einstückige Herstellung des Kopfstückes 4 mit den Umlenkabschnitten 12 gewährleistet eine einwandfreie Ausrichtung der Innenumlenkung 14 und der Außenumlenkung 13 zueinander, sodass die Wälzkörper 5 insbesondere in den Umlenkabschnitten 12 einwandfrei umgelenkt werden können. Die Verwendung von Stahl als Material für die Kopfstücke 4 bietet sich insbesondere an, wenn erfindungsgemäße Linearwälzlager beispielsweise einer Betastrahlung ausgesetzt sind.
- 1: Führungswagen
- 2: Führungsschiene
- 3: Tragkörper
- 4: Kopfstück
- 5: Schenkel
- 6: Schenkelabschnitt
- 7: Verbindungsabschnitt
- 8: Wälzkörperkarial
- 9: Kugel
- 10: Lastabschnitt
- 10a: Laufbahn
- 10b: Laufbahn
- 11: Rücklaufabschnitt
- 12: Umlenkabschnitt
- 13: Außenumlenkung
- 14: Innenumlenkung
- 15: äußere Umlenkbahn
- 16: innere Umlenkbahn
- 17: Schmierkanal

## Patentansprüche

1. Linearwälzlager, mit einem Führungswagen (1), der zur längsverschieblichen Führung entlang einer Führungsschiene (2) geeignet ist, welcher Führungswagen (1) für einen endlosen Umlauf von Wälzkörpern (9) einen endlosen Wälzkörperkanal (8) aufweist, der einen Lastabschnitt (10), einen Rücklaufabschnitt (11) und zwei den Lastabschnitt (10) mit dem Rücklaufabschnitt (11) verbindende Umlenkabschnitte (12) aufweist, wobei die Wälzkörper (9) in dem Lastabschnitt (10) an Laufbahnen (10a, 10b) abwälzbar sind, in dem Rücklaufabschnitt (11) lastfrei rückführbar und in den Umlenkabschnitten (12) zwischen dem Lastabschnitt (10) und dem Rücklaufabschnitt (11) umlenkbar sind, wobei die Umlenkabschnitte (12) jeweils eine mit einer inneren Umlenkbahn (16) versehene Innenumlenkung (14) und eine mit einer äußeren Umlenkbahn (15) versehene Außenumlenkung (13) aufweisen, wobei die Innenumlenkung (14) und die Außenumlenkung (13) des Umlenkabschnittes (12) einstückig miteinander verbunden sind, **dadurch gekennzeichnet, dass** die Umlenkabschnitte (12) je an einem Kopfstück (4) und die Lastabschnitte (10) an einem Tragkörper (3) des Führungswagens (1) ausgebildet sind, wobei das Kopfstück (4) einstückig mit dem jeweiligen Umlenkabschnitt (12) verbunden ist.

2. Linearwälzlager nach Anspruch 1, bei dem der etwa u-förmige Führungswagen (1) mit zwei Schenkeln (5) für den Umgriff der Führungsschiene (2) versehen ist, wobei an jedem Schenkel (5) wenigstens ein, vorzugsweise zwei parallel zueinander angeordnete Lastabschnitte (10) des endlosen Wälzkörperkanals (8) vorgesehen sind, wobei die etwa u-förmigen Kopfstücke (4) jeweils zwei Schenkelabschnitte (6) aufweisen, die über einen Verbindungsabschnitt (7) einstückig miteinander verbunden sind.

3. Linearwälzlager nach Anspruch 2, bei dem an jedem Schenkelabschnitt (6) wenigstens einer, vorzugsweise zwei Umlenkabschnitte (12) einstückig ausgebildet sind.

4. Linearwälzlager nach Anspruch 1, bei dem die Umlenkabschnitte (12) aus Metall gebildet sind.

5. Linearwälzlager nach Anspruch 4, bei dem die Umlenkabschnitte (12) im Feinguss hergestellt sind.

6. Verfahren zur Herstellung eines Linearwälzlagers nach Anspruch 1, bei dem der Tragkörper (3) und die Kopfstücke (4) getrennt hergestellt und aus Metall gebildet sind, wobei jeder Umlenkabschnitt (12) im Feingussverfahren hergestellt ist.

7. Verfahren nach Anspruch 6, bei dem das Kopfstück (4) einstückig mit dem Umlenkabschnitt (12) verbunden und im Feingussverfahren hergestellt ist.

8. Verfahren nach Anspruch 7, bei dem aus einem im Vergleich zu Stahl niedrig schmelzenden Werkstoff ein Modell des Kopfstückes (4) hergestellt und mit einer feuerfesten Überzugsmasse, vorzugsweise keramischen Masse überzogen und nach Abbinden oder Erstarren der Überzugsmasse in einen Formstoff eingebettet und mit dem Formstoff gebrannt wird, wobei mittels des Brennvorganges der niedrig schmelzende Werkstoff des Modells unter Freigabe eines Formhohlraums ausschmilzt, und wobei das Kopfstück (4) bildendes geschmolzenes Metall in den Formhohlraum gegossen wird, und wobei der gebrannte Formstoff und die Überzugsmasse unter Freigabe des erstarrten Kopfstückes (4) entfernt wird.

9. Verfahren nach Anspruch 8, bei dem das aus mehreren Teilen gebildete Modell das u-förmige Kopfstück (4) bildet, das jeweils zwei Schenkelabschnitte (6) aufweist, die über einen Verbindungsabschnitt (7) miteinander verbunden sind, wobei jeder Schenkelabschnitt (6) mindestens einen Umlenkabschnitt (12) mit Innenumlenkung (14) und Außenumlenkung (13) aufweist.

## Claims

1. Linear roller bearing, having a guide carriage (1) which is suitable for longitudinally displaceable guidance along a guide rail (2), which guide carriage (1) has an endless rolling body channel (8) for endless circulation of rolling bodies (9), which rolling body channel (8) has a load section (10), a return section (11) and two deflection sections (12) which connect the load section (10) to the return section (11), it being possible for the rolling bodies (9) to roll in the load section (10) on raceways (10a, 10b), to be returned without load in the return section (11) and to be deflected in the deflection sections (12) between the load section (10) and the return section (11), the deflection sections (12) having in each case one inner deflection means (14) which is provided with an inner deflection race (16) and an outer deflection means (13) which is provided with an outer deflection race (15), the inner deflection means (14) and the outer deflection means (13) of the deflection section (12) being connected integrally to one another, **characterized in that** the deflection sections (12) are formed in each case on one head piece (4) and the load sections (10) are formed on one supporting body (3) of the guide carriage (1), the head piece (4) being connected integrally to the respective deflection section (12).

2. Linear roller bearing according to Claim 1, in which the approximately U-shaped guide carriage (1) is provided with two limbs (5) for engaging around the guide rail (2), at least one, preferably two load sections (10) of the endless rolling body channel (8) which are arranged parallel to one another being provided on each limb (5), the approximately U-shaped head pieces (4) having in each case two limb sections (6) which are connected integrally to one another via a connecting section (7).

3. Linear roller bearing according to Claim 2, in which at least one, preferably two deflection sections (12) are formed integrally on each limb section (6).

4. Linear roller bearing according to Claim 1, in which the deflection sections (12) are formed from metal.

5. Linear roller bearing according to Claim 4, in which the deflection sections (12) are produced by precision casting.

6. Method for producing a linear roller bearing according to Claim 1, in which the supporting body (3) and the head pieces (4) are produced separately and are formed from metal, each deflection section (12) being produced by the precision casting process.

7. Method according to Claim 6, in which the head piece (4) is connected integrally to the deflection section (12) and is produced by the precision casting process.

8. Method according to Claim 7, in which a model of the head piece (4) is produced from a material which melts at a low temperature in comparison with steel, is coated by a fire-resistant coating mass, preferably ceramic mass, and, after setting or solidification of the coating mass, is embedded into a molding material and is fired with the molding material, the material of the model with a low melting point melting by means of the firing process with the release of a mold cavity, and the molten metal which forms the head piece (4) being poured into the mold cavity, and the fired molding material and the coating mass being removed with the release of the solidified head piece (4).

9. Method according to Claim 8, in which the model which is formed from a plurality of parts forms the U-shaped head piece (4) which has in each case two limb sections (6) which are connected to one another via a connecting section (7), each limb section (6) having at least one deflection section (12) with an inner deflection means (14) and an outer deflection means (13).

## Revendications

1. Palier à roulement linéaire, comprenant un chariot de guidage (1) qui est prévu pour assurer un guidage de manière déplaçable longitudinale le long d'un rail de guidage (2), lequel chariot de guidage (1) présente un canal pour corps de roulement sans fin (8) pour permettre une circulation sans fin de corps de roulement (9), lequel canal pour corps de roulement présente une portion de charge (10), une portion de retour (11) et deux portions de déviation (12) reliant la portion de charge (10) à la portion de retour (11), les corps de roulement (9) pouvant circuler dans la portion de charge (10) sur des pistes de roulement (10a, 10b), pouvant être ramenés sans charge dans la portion de retour (11) et pouvant être déviés dans les portions de déviation (12) entre la portion de charge (10) et la portion de retour (11), les portions de déviation (12) présentant à chaque fois une déviation interne (14) pourvue d'une piste de déviation interne (16) et une déviation externe (13) pourvue d'une piste de déviation externe (15), la déviation interne (14) et la déviation externe (13) de la portion de déviation (12) étant connectées l'une à l'autre d'une seule pièce, **caractérisé en ce que** les portions de déviation (12) sont réalisées à chaque fois sur une pièce de tête (4) et les portions de charge (10) sont réalisées sur un corps porteur (3) du chariot de guidage (1), la pièce de tête (4) étant connectée d'une seule pièce à la portion de déviation respective (12).

2. Palier à roulement linéaire selon la revendication 1, dans lequel le chariot de guidage (1) approximativement en forme de U est pourvu de deux branches (5) pour saisir le tour du rail de guidage (2), au moins une, de préférence deux portions de charge disposées parallèlement l'une à l'autre (10) du canal pour corps de roulement sans fin (8) étant prévues sur chaque branche (5), les pièces de tête (4) approximativement en forme de U présentant à chaque fois deux portions de branche (6), lesquelles sont connectées d'une seule pièce l'une à l'autre par le biais d'une portion de connexion (7).

3. Palier à roulement linéaire selon la revendication 2, dans lequel au moins une, de préférence deux portions de déviation (12) sont réalisées d'une seule pièce sur chaque portion de branche (6).

4. Palier à roulement linéaire selon la revendication 1, dans lequel les portions de déviation (12) sont formées de métal.

5. Palier à roulement linéaire selon la revendication 4, dans lequel les portions de déviation (12) sont fabriquées par coulée de précision.

6. Procédé de fabrication d'un palier à roulement linéaire selon la revendication 1, dans lequel le corps porteur (3) et les pièces de tête (4) sont fabriqués séparément et sont formés de métal, chaque portion de déviation (12) étant fabriquée dans un procédé de coulée de précision.

7. Procédé selon la revendication 6, dans lequel la pièce de tête (4) est connectée d'une seule pièce à la portion de déviation (12) et est fabriquée par un procédé de coulée de précision.

8. Procédé selon la revendication 7, dans lequel un modèle de la pièce de tête (4) est fabriqué à partir d'un matériau à point de fusion plus bas que celui de l'acier, et est revêtu d'une masse de revêtement ignifuge, de préférence une masse céramique, et après la prise ou la rigidification de la masse de revêtement, est noyé dans une matière de moulage et est brûlé avec la matière de moulage, le matériau à bas point de fusion du modèle étant éliminé par fusion lors de l'opération de combustion en libérant une cavité de moule, et du métal en fusion formant la pièce de tête (4) étant coulé dans la cavité de moule, et la matière de moulage brûlée et la masse de revêtement étant enlevées en libérant la pièce de tête rigidifiée (4).

9. Procédé selon la revendication 8, dans lequel le modèle formé de plusieurs parties forme la pièce de tête en forme de U (4), qui présente à chaque fois deux portions de branche (6) qui sont connectées l'une à l'autre par le biais d'une portion de connexion (7), chaque portion de branche (6) présentant au moins une portion de déviation (12) avec une déviation interne (14) et une déviation externe (13).
